# EUROPEAN PATENT APPLICATION

(11) **EP 4 246 421 A1**
(43) Date of publication of application: **20.09.2023**
(21) Application number: 20961559.0
(22) Date of filing: 11.11.2020
(51) Int. Cl.: G06Q 50/10

(54) **INFORMATION PROCESSING DEVICE, INFORMATION PROCESSING METHOD, AND PROGRAM**

(71) Applicant: Japan Tobacco Inc., Tokyo 105-6927 (JP)
(72) Inventor: FUJINO, Yusuke, Tokyo 130-8603 (JP); OSAWA, Kosuke, Tokyo 130-8603 (JP); HARA, Kenta, Tokyo 130-8603 (JP); SEMA, Hiroaki, Tokyo 130-8603 (JP); SHIMADA, Yurina, Tokyo 130-8603 (JP); KATO, Masato, Tokyo 130-8603 (JP)
(74) Representative: Hoffmann Eitle
(86) International application number: PCT/JP2020/042135
(87) International publication number: WO 2022/102031

(57) **Abstract**

An information processing device comprises: a storage unit for storing position information indicating the positions of a plurality of inhalation device related facilities; an acquisition unit for acquiring position information indicating the position of a user's user terminal connected to an inhalation device in response to the startup of the inhalation device; a specification unit for specifying an extraction region including at least two positions specified by the position information acquired by the acquisition unit; a comparison unit for comparing the extraction region specified by the specification unit and the position information for the plurality of inhalation device related facilities; an extraction unit for extracting one or more inhalation device related facilities included in the extraction region on the basis of the comparison result from the comparison unit; and an output unit for outputting the extraction result from the extraction unit to the user terminal.

## Description

### FIELD

The present invention relates to an information processing device, an information processing method, and a program.

### BACKGROUND

In recent years, a technique for displaying smoking areas on a map has been developed.

For example, Patent Document 1 discloses the association of geographical position information on smoking areas with electronic map data, searching for smoking areas within a certain distance from the position of the user, and transmitting the result of the search to the user's terminal.

### CITATION LIST

### PATENT LITERATURE

Patent Document 1: JP2008-59382A

### SUMMARY

### TECHNICAL PROBLEM

In Patent Document 1, acquiring information on smoking areas the certain distance from the position of the user requires the user to actively search for smoking areas.

In view of the above program, an object of the present invention is to provide a technique capable of extracting information on an inhalation-related facility without requiring a request from a user.

### SOLUTION TO PROBLEM

An information processing device according to an aspect of the present invention includes: a storage unit configured to store position information indicating positions of a plurality of inhalation-related facilities; an acquisition unit configured to acquire position information indicating a position of a user terminal of a user connected to an inhaler in response to activation of the inhaler; a specification unit configured to specify an extraction area including at least two positions specified by the position information acquired by the acquisition unit; a comparison unit configured to compare the extraction area specified by the specification unit with the position information of the plurality of inhalation-related facilities; an extraction unit configured to extract, based on a comparison result obtained by the comparison unit, one or more inhalation-related facilities included within the extraction area; and an output unit configured to output an extraction result obtained by the extraction unit to the user terminal.

An information processing method according to an aspect of the present invention includes: acquiring position information indicating a position of a user terminal of a user connected to an inhaler in response to activation of the inhaler; specifying an extraction area including at least two positions specified by the acquired position information; comparing the extraction area with position information, stored in a storage unit, of a plurality of inhalation-related facilities; extracting, based on a comparison result, one or more inhalation-related facilities included within the extraction area; and outputting an extraction result to the user terminal.

A program according to an aspect of the present invention causes a computer to implement: an acquisition unit configured to acquire position information indicating a position of a user terminal of a user connected to an inhaler in response to activation of the inhaler; a specification unit configured to specify an extraction area including at least two positions specified by the position information acquired by the acquisition unit; a comparison unit configured to compare the extraction area specified by the specification unit with position information, stored in a storage unit, of a plurality of inhalation-related facilities; an extraction unit configured to extract, based on a comparison result obtained by the comparison unit, one or more inhalation-related facilities included within the extraction area; and an output unit configured to output an extraction result obtained by the extraction unit to the user terminal.

In the present invention, the "unit" or "device" does not simply refer to a physical means, but encompasses a case where functions equipped in the "unit" or "device" are implemented by software. The functions equipped in a single "unit" or "device" may be implemented by two or more physical means or devices, and the functions of two or more "units" or "devices" may be implemented by a single physical means or device.

### ADVANTAGEOUS EFFECTS OF INVENTION

According to the present invention, it is possible to provide a technique capable of extracting information on an inhalation-related facility without requiring a request from a user.

### BRIEF DESCRIPTION OF THE DRAWINGS

FIG. 1 is a block diagram schematically showing a configuration example of an information distribution system according to an embodiment of the present invention.
FIG. 2 is a schematic diagram schematically showing a first configuration example of an inhaling device according to the embodiment of the present invention.
FIG. 3 is a schematic diagram schematically showing a second configuration example of the inhaling device according to the embodiment of the present invention.
FIG. 4 is a block diagram schematically showing a configuration example of an information processing server according to an embodiment of the present invention.
FIG. 5 is a diagram schematically showing a configuration example of a log information DB according to the embodiment of the present invention.
FIG. 6 is a diagram schematically showing a configuration example of an inhalation-related facility DB according to the embodiment of the present invention.
FIG. 7 is a diagram schematically showing a configuration example of a user information DB according to the embodiment of the present invention.
FIG. 8 is a diagram schematically showing a display example of an extraction result according to the embodiment of the present invention.
FIG. 9 is a flowchart showing an example of processing by the information processing server according to the embodiment of the present invention.

### DETAILED DESCRIPTION

Hereinafter, an aspect of an embodiment of the present invention will be described with reference to the accompanying drawings. In the drawings, the same constituent elements will be assigned identical reference symbols where possible, and redundant descriptions will be omitted.

### «Configuration Example of Information Distribution System»

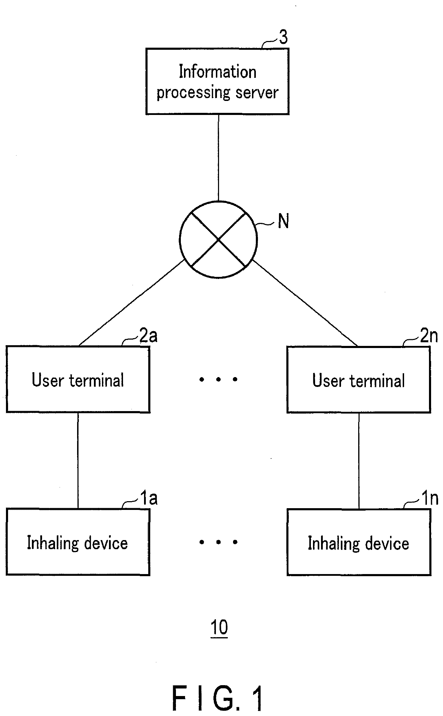

FIG. 1 is a schematic configuration diagram of an information distribution system according to the first embodiment of the present invention.

As shown in FIG. 1, an information distribution system 10 includes, as an example, n inhaling devices 1a to 1n (where n is a given integral value equal to or greater than 1), n user terminals 2a to 2n (where n is a given integral value equal to or greater than 1) respectively connected to the n inhaling devices 1a to 1n, and an information processing server 3 configured to enable communication with the user terminals 2a to 2n via a network N. In the description that follows, when the n inhaling devices are not distinguished from one another, each one will be simply referred to as an "inhaling device 1", with part of the reference symbol omitted. Similarly, when the n user terminals are not distinguished from one another, each one of them will be simply referred to as a "user terminal 2", with part of the reference symbol omitted. It is assumed that an inhaling device 1 and a user terminal 2 to which the same alphabetical symbol is appended at the end are possessed by an identical user. For example, an inhaling device 1a and a user terminal 2a are possessed by an identical user.

The information distribution system 10 is what is known as a "client server system". The information distribution system 10 is realized by mutual communications between the n user terminals 2, which are clients, and the information processing server 3 via the network N. The network N is realized by, for example, the Internet, a network such as a mobile telephone network, a local area network (LAN), or a network that is a combination thereof.

The inhaling device 1 is an electronic device that produces a substance to be inhaled by a user. The inhaling device 1 corresponds to an inhaler or a flavor inhaler. A configuration example of an inhaling device that may be the inhaling device 1 will be described later.

A user terminal 2 is a portable electronic device equipped with a communication function. For example, the user terminal 2 is a smartphone, a tablet terminal, or the like. The user terminal 2 includes a sensor that detects position information of the user terminal 2. For example, the position information is information indicating latitude and longitude. The sensor that detects the position information is, for example, a global positioning system (GPS) sensor.

The information processing server 3 is a computer equipped with an information processing function. The information processing server 3 is realized by, for example, one or more (at least one) server devices. A configuration example of the information processing server 3 will be described later. The information processing server 3 is an example of an information processing device.

The inhaling device 1 and the user terminal 2 are associated with each other, and mutual data transmission and reception are enabled by executing short-range wireless communications based on, for example, Bluetooth (registered trademark), Bluetooth Low Energy (BLE), etc. Data transmission and reception between the inhaling device 1 and the user terminal 2 may be executed by any communication technology such as Wi-Fi (registered trademark), a low-power wide-area network (LPWAN), a near-field communication (NFC), or the like, aside from BLE communication technology. Also, data transmission and reception between the inhaling device 1 and the user terminal 2 is not necessarily performed by wireless communications, and may be performed by wired communications using a Universal Serial Bus (USB), a Mini USB, a Micro USB, Lightning, or the like.

### «Configuration Example of Inhaling Device»

An inhaling device is a device that produces a substance to be inhaled by a user. In the description that follows, it is assumed that the substance produced by the inhaling device is an aerosol. In another case, the substance produced by the inhaling device may be a gas.

### (1) First Configuration Example

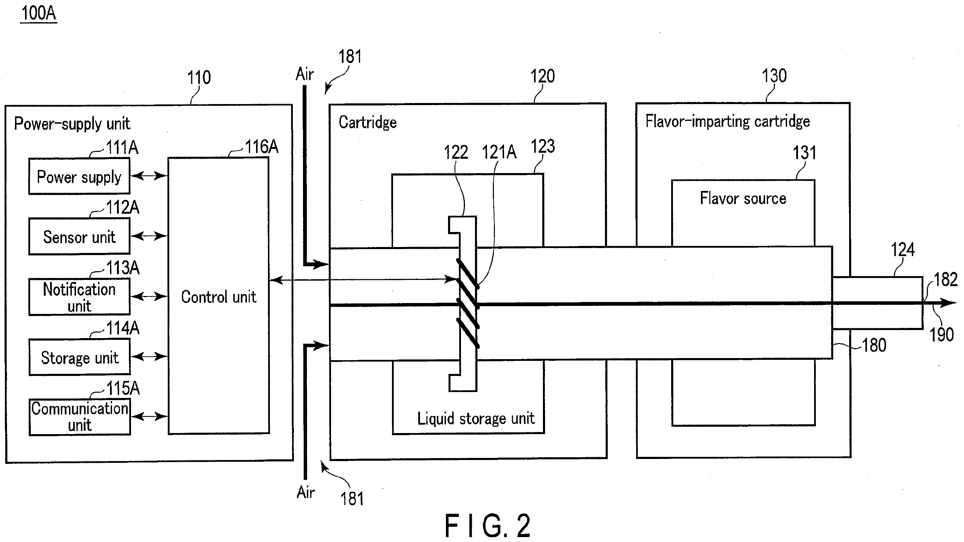

FIG. 2 is a schematic diagram schematically showing the first configuration example of the inhaling device. As shown in FIG. 2, an inhaling device 100A according to the present configuration example includes a power-supply unit 110, a cartridge 120, and a flavor-imparting cartridge 130. The power-supply unit 110 includes a power supply 111A, a sensor unit 112A, a notification unit 113A, a storage unit 114A, a communication unit 115A, and a control unit 116A. The cartridge 120 includes a heating unit 121A, a liquid guide unit 122, and a liquid storage unit 123. The flavor-imparting cartridge 130 includes a flavor source 131 and a mouthpiece 124. In the cartridge 120 and the flavor-imparting cartridge 130, an airflow path 180 is formed.

The power supply 111A accumulates electric power. Based on control by the control unit 116A, the power supply 111A supplies power to each constituent element of the inhaling device 100A. The power supply 111A may be configured of, for example, a chargeable battery such as a lithium-ion secondary battery.

The sensor unit 112A acquires various types of information relating to the inhaling device 100A. As an example, the sensor unit 112A is configured of a pressure sensor such as a microphone capacitor, a flowrate sensor, a temperature sensor, etc., and acquires values involved with user inhalation. As another example, the sensor unit 112A is configured of an input device which receives an information input from the user, such as a button, a switch, etc.

The notification unit 113A notifies the user of the information. The notification unit 113A is configured of, for example, a light-emitting device which emits light, a display device which displays an image, a sound output device which outputs sound, a vibration device which vibrates, etc.

The storage unit 114A stores various types of information for operation of the inhaling device 100A. The storage unit 114A is configured of, for example, a non-volatile storage medium such as a flash memory.

The communication unit 115A is a communication interface that enables communications compatible with a given wired or wireless communication standard to be performed. As such a communication standard, Wi-Fi (registered trademark), Bluetooth (registered trademark), etc. may be adopted.

The control unit 116A functions as an arithmetic processor and a controller, and controls the entire operation of the inhaling device 100A in accordance with various programs. The control unit 116A is realized by, for example, electronic circuitry such as a central processing unit (CPU), or a microprocessor.

The liquid storage unit 123 stores an aerosol source. By atomizing the aerosol source, aerosol is produced. The aerosol source is, for example, a polyhydric alcohol such as glycerin and propylene glycol, and a liquid such as water. The aerosol source may contain a tobacco-derived or non-tobacco-derived flavor component. When the inhaling device 100A is a medical aspirator such as a nebulizer, the aerosol source may contain a drug.

The liquid guide unit 122 guides the aerosol source which is a liquid stored in the liquid storage unit 123 from the liquid storage unit 123, and holds the aerosol source. The liquid guide unit 122 is, for example, a wick formed by twisting a fiber material such as glass fiber or a porous material such as a porous ceramic. In this case, the aerosol source stored in the liquid storage unit 123 is guided by the capillary effect of the wick.

The heating unit 121A heats the aerosol source, atomizes the aerosol source and produce aerosol. In the example shown in FIG. 2, the heating unit 121A is configured as a coil, and is wound around the liquid guide unit 122. When the heating unit 121A generates heat, the aerosol source held in the liquid guide unit 122 is heated and atomized, thus producing aerosol. The heating unit 121A generates heat when fed from the power supply 111A. As an example, feeding may be performed when the sensor unit 112A has detected the commencement of inhaling by the user and/or the input of predetermined information. Feeding may be stopped when the sensor unit 112A has detected the termination of inhaling by the user and/or the input of predetermined information.

The flavor source 131 is a constituent element for imparting a flavor component to aerosol. The flavor source 131 may contain a tobacco-derived or non-tobacco-derived flavor component.

The airflow path 180 is a path of air inhaled by the user. The airflow path 180 has a tubular structure including, at one of both ends, an air inflow hole 181, which is an inlet of air flowing to the airflow path 180, or an air outflow hole 182, which is an outlet of air flowing from the airflow path 180. In the middle of the airflow path 180, the liquid guide unit 122 is arranged on an upstream side (the side closer to the air inflow hole 181), and a flavor source 131 is arranged on a downstream side (the side closer to the air outflow hole 182). The air flowing in from the air inflow hole 181 in accordance with user inhalation is mixed with the aerosol produced by the heating unit 121A, and, as shown by an arrow 190, passes through the flavor source 131 and is transported to the air outflow hole 182. When a mixed fluid of the aerosol and air passes through the flavor source 131, a flavor component included in the flavor source 131 is imparted to the aerosol.

The mouthpiece 124 is a member which comes in contact with the user's mouth during inhaling. In the mouthpiece 124, the air outflow hole 182 is arranged. The user can introduce a mixed fluid of the aerosol and air into the oral cavity through inhalation via the mouthpiece 124 put in the user's mouth.

A configuration example of the inhaling device 100A has been described above. As a matter of course, the configuration of the inhaling device 100A is not limited to the above, and various configurations that will be described below as examples may be adopted.

As an example, the inhaling device 100A may not include a flavor-imparting cartridge 130. In this case, a mouthpiece 124 is provided in the cartridge 120.

As another example, the inhaling device 100A may include a plurality of types of aerosol sources. Still other types of aerosol may be produced by a chemical reaction caused by a plurality of types of aerosol produced by a plurality of types of aerosol sources being mixed in the airflow path 180.

Moreover, the means for atomizing the aerosol source are not limited to heating by the heating unit 121A. For example, the aerosol source may be atomized by means such as vibration atomizing or induction heating.

### (2) Second Configuration Example

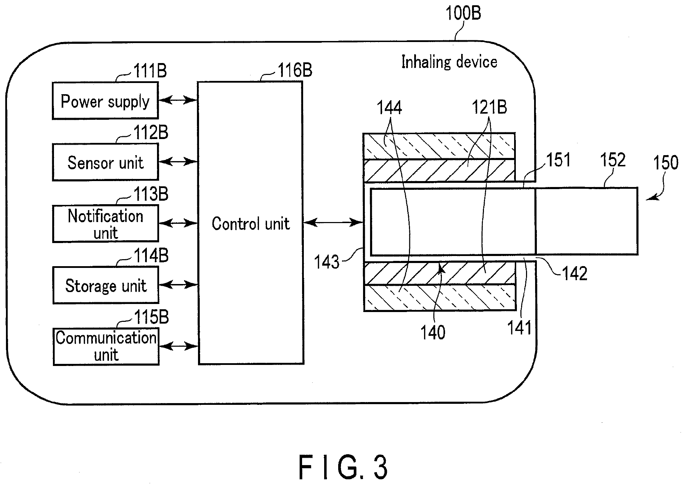

FIG. 3 is a schematic diagram schematically showing the second configuration example of the inhaling device. As shown in FIG. 3, an inhaling device 100B according to the present configuration example includes a power supply 111B, a sensor unit 112B, a notification unit 113B, a storage unit 114B, a communication unit 115B, a control unit 116B, a heating unit 121B, a holding part 140, and a heat-insulating part 144.

The power supply 111B, the sensor unit 112B, the notification unit 113B, the storage unit 114B, the communication unit 115B, and the control unit 116B are substantially identical to the corresponding constituent elements included in the inhaling device 100A according to the first configuration example.

The holding part 140 includes an internal space 141, and holds a stick-shaped base material 150 with part of the stick-shaped base material 150 housed in the internal space 141. The holding part 140 includes an opening 142 which allows the internal space 141 to be communicated to the outside, and holds the stick-shaped base material 150 inserted into the internal space 141 from the opening 142. The holding part 140 is, for example, a tubular body including the opening 142 and a bottom portion 143 as bottom surfaces, and defines a columnar internal space 141. The holding part 140 is also equipped with a function of defining a path of air that is supplied to the stick-shaped base material 150. An air inflow hole which is an inlet of air to such a path is arranged in, for example, the bottom portion 143. On the other hand, an air outflow hole which is an outlet of air from such a path is the opening 142.

The stick-shaped base material 150 includes a base material portion 151 and a suction portion 152. The base material portion 151 includes an aerosol source. In the present configuration example, the aerosol source is not limited to a liquid, and may be a solid. With the stick-shaped base material 150 held in the holding part 140, at least part of the base material portion 151 is housed in the internal space 141, and at least part of the suction portion 152 projects from the opening 142. Through user inhalation via the suction portion 152 projecting from the opening 142 which comes into contact with the user's mouth, air flows in from an air inflow hole (not illustrated) to the internal space 141, and reaches the user's oral cavity together with the aerosol produced from the base material portion 151.

The heating unit 121B has a configuration similar to that of the heating unit 121A according to the first configuration example. However, in the example shown in FIG. 3, the heating unit 121B is configured in a film shape, and is arranged so as to cover the outer periphery of the holding part 140. When the heating unit 121B generates heat, the base material portion 151 of the stick-shaped base material 150 is heated from the outer periphery, and thereby aerosol is produced.

The heat-insulating part 144 prevents heat transfer from the heating unit 121B to another constituent element. For example, the heat-insulating part 144 is configured from a vacuum-insulating material, an aerogel-insulating material, etc.

A configuration example of the inhaling device 100B has been described above. As a matter of course, the configuration of the inhaling device 100B is not limited to the above, and various configurations that will be described below as examples may be adopted.

As an example, the heating unit 121B may be configured in a blade shape and arranged so as to project from the bottom portion 143 of the holding part 140 into the internal space 141. In this case, the blade-shaped heating unit 121B is inserted into the base material portion 151 of the stick-shaped base material 150, and the base material portion 151 of the stick-shaped base material 150 is heated from the inside. As another example, the heating unit 121B may be arranged so as to cover the bottom portion 143 of the holding part 140. Also, the heating unit 121B may be configured as a combination of two or more of a first heating unit that covers an outer periphery of the holding part 140, a blade-shaped second heating unit, and a third heating unit that covers a bottom portion 143 of the holding part 140.

As another example, the holding part 140 may include an open/close mechanism such as a hinge, which opens and closes part of an outer shell that forms the internal space 141. By opening and closing the outer shell, the holding part 140 may hold the stick-shaped base material 150 inserted into the internal space 141. In this case, the heating unit 121B may be provided in the place of the holding part 140 which holds the stick-shaped base material 150, and may heat the stick-shaped base material 150 while pressing it.

Moreover, the means for atomizing the aerosol source are not limited to heating by the heating unit 121B. For example, the means for atomizing the aerosol source may be based on induction heating.

Also, the inhaling device 100B may further include the heating unit 121A, the liquid guide unit 122, the liquid storage unit 123, and the airflow path 180 according to the first configuration example, and the air outflow hole 182 of the airflow path 180 may also function as an air inflow hole to the internal space 141. In this case, a mixed fluid of the aerosol and air produced by the heating unit 121A flows into the internal space 141, is further mixed with the aerosol produced by the heating unit 121B, and reaches the oral cavity of the user.

The inhaling device 100 is not limited to the first configuration example, the second configuration example, or the examples illustrated in FIGS. 2 and 3, and may have any configuration or form as long as it is a device for inhalation of the aerosol or gas.

### «Configuration Example of Information Processing Server»

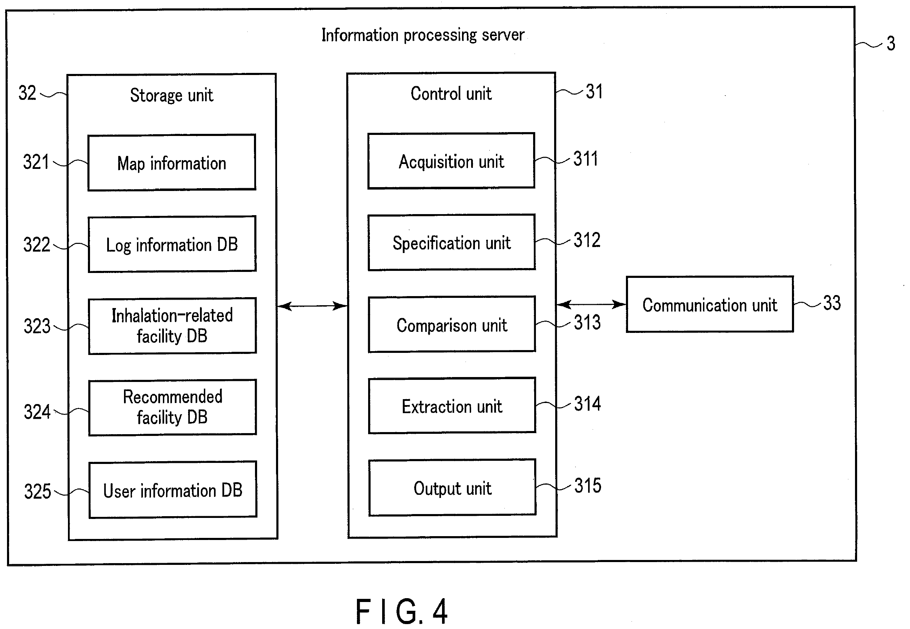

FIG. 4 is a block diagram schematically showing a configuration example of an information processing server according to an embodiment of the present invention.

The information processing server 3 includes a control unit 31, a storage unit 32, and a communication unit 33. These units are mutually connected via a bus line.

The control unit 31 controls the entire operation of the information processing server 3 in accordance with programs stored in the storage unit 32. The control unit 31 is configured of, for example, electronic circuitry such as a processor. The processor is, for example, a CPU or the like. By executing the programs stored in the storage unit 32, the control unit 31 realizes the respective units that will be discussed later, and executes a variety of operations.

The storage unit 32 is configured of a main storage and an auxiliary storage. The main storage is configured of, for example, a volatile memory that provides a work area for the processor. The main storage is configured of, for example, a random access memory (RAM) or the like. The auxiliary storage is configured of, for example, a non-volatile memory that stores various types of information and programs for operation of the information processing server 3. The auxiliary storage is configured of, for example, a hard disk drive (HDD), a solid-state drive (SSD), or the like. The storage unit 32 stores programs for causing the control unit 31 to implement the respective units that will be discussed later. The storage unit 32 stores map information 321, log information DB 322, inhalation-related facility DB 323, recommended facility DB 324, and user information DB 325.

The map information 321 is information relating to an existing general map indicating states of things that are distributed on the surface of the ground. The map information 321 may be stored in advance in the storage unit 32, or downloaded from a server (not illustrated) to the information processing server 3 via the network N. The map information 321 may be suitably updated.

The log information DB 322 is a database that stores data based on log information transmitted from the user terminal 2 to the information processing server 3. The log information is transmitted from the user terminal 2 to the information processing server 3 in response to activation of the inhaling device 1. For example, the user terminal 2 acquires, from the inhaling device 1, information indicating the activation based on the activation of the inhaling device 1. The user terminal 2 transmits the log information to the information processing server 3 based on the acquisition of the information indicating the activation. The log information includes a user ID uniquely assigned to the user terminal 2. The log information includes position information of the user terminal 2 detected by the user terminal 2. The log information may include time information on the time when the user terminal 2 acquired the position information. The log information may include information other than the position information and the time information. The log information DB 322 is updated every time the information processing server 3 receives log information from the user terminal 2. A configuration example of the log information DB 322 will be discussed later.

The inhalation-related facility DB 323 is a database that stores information relating to a plurality of inhalation-related facilities. The inhalation-related facility refers to a facility in which use of the inhaling device 1 is allowed. The inhalation-related facility may be a facility in which any users are allowed to use the inhaling device 1. The inhalation-related facility may be a facility among facilities in which use of the inhaling device 1 is allowed other than the facility in which only specific users are allowed to use the inhaling device 1. Also, the inhalation-related facility may include a facility in which the smoking of a cigarette is allowed, in addition to the use of the inhaling device 1. The permission means authorization by an administrator of a facility or the public administration. The facility refers to a unit of location such as a building or a site. The plurality of inhalation-related facilities are identified by means of text information indicating respective names with characters, marks, or the like. Specific examples of the inhalation-related facility include a dedicated facility such as a smoking area situated on a street, and a facility such as a cafe, restaurant, pub, shopping center, service area (SA), park, ballpark, station, or airport. The inhalation-related facility DB 323 stores position information indicating positions of the plurality of inhalation-related facilities, information identifying the plurality of inhalation-related facilities, etc. in association with each other. The data of the inhalation-related facility DB 323 may be stored in advance in the storage unit 32, or downloaded from a server (not illustrated) to the information processing server 3 via the network N. The inhalation-related facility DB 323 may be suitably updated. A configuration example of the inhalation-related facility DB 323 will be discussed later.

The recommended facility DB 324 is a database that stores information relating to a plurality of recommended facilities. The recommended facility is a facility different from the inhalation-related facility and to be recommended to a user. The recommended facility may include a rest facility such as a coffee shop or a restaurant, a store such as a bookstore or a grocery store, an amusement facility, and the like. The plurality of recommended facilities are identified by means of text information indicating respective names with characters, marks, or the like. The recommended facility DB 324 stores position information indicating positions of the plurality of recommended facilities, information identifying the plurality of recommended facilities, etc. in association with each other. The data of the recommended facility DB 324 may be stored in advance in the storage unit 32, or downloaded from a server (not illustrated) to the information processing server 3 via the network N. The recommended facility DB 324 may be suitably updated.

The user information DB 325 is a database that stores user information which is information unique to a user who possesses the user terminal 2. The user information includes, for example, a preset user ID, an address of the user terminal 2, user data indicating user' sex and age, user's preference information, etc., and attribute information selected by the user and relating to the inhalation-related facility. The user ID is an identifier uniquely assigned to the user terminal 2. The preference information is information indicating a user's preference such as taste preference. The attribute information relating to the inhalation-related facility is information representing attributes of the inhalation-related facility. The attributes of the inhalation-related facility are an indoor or outdoor facility, type information indicating the type of the usable inhaling device 1, and information indicating whether eating and drinking are possible. The type information is, for example, information on a model number of the inhaling device that varies depending on the heating temperature. The attribute information selected by the user and relating to the inhalation-related facility is hereinafter also referred to as "first attribute information". The first attribute information indicates one or more attributes, selected by the user, of the inhalation-related facility. The one or more attributes indicated by the first attribute information are hereinafter also referred to as "first attributes". For example, the user data and the first attribute information are input by the user from an input unit (not illustrated) of the user terminal 2. The user data and the first attribute information may be suitably updated. The user data and the first attribute information are transmitted from the user terminal 2 to the information processing server 3. The user information DB 325 is updated in accordance with the update of the user data and the first attribute information. The user information may include other information. A configuration example of the user information DB 325 will be described later.

The communication unit 33 is configured of one or more communication interfaces that enable communications compatible with a given wireless communication standard to be performed. The communication unit 33 includes one or more communication interfaces that enable communications to be performed between the information processing server 3 and the user terminal 2 via the network N as described above. The communication unit 33, for example, receives log information transmitted from the user terminal 2. The communication unit 33, for example, transmits an extraction result described later to the user terminal 2.

A hardware configuration of the information processing server 3 is not limited to the above-described configuration. The above-described constituent elements of the information processing server 3 may be suitably omitted or changed, and a new constituent element may be added to the information processing server 3.

Each of the units realized by the above-described control unit 31 will be described.

The control unit 31 realizes an acquisition unit 311, a specification unit 312, a comparison unit 313, an extraction unit 314, and an output unit 315. Each unit realized by the control unit 31 can also be regarded as each function. Each unit being realized by the control unit 31 can also be regarded as each unit being realized by the processor.

In response to activation of the inhaling device 1, the acquisition unit 311 acquires position information indicating a position of the user terminal 2 connected to the inhaling device 1. For example, the acquisition unit 311 acquires position information indicating the position of the user terminal 2 via the communication unit 33.

The specification unit 312 specifies an extraction area including at least two positions specified by the position information acquired by the acquisition unit 311. Since the extraction area includes at least two positions specified by the position information related to the activation of the inhaling device 1, it can be said that the extraction area is an area in which the user is highly likely to use the inhaling device 1. The extraction area is an area for extracting an inhalation-related facility that is not used by the user in an area in which the user is likely to use the inhaling device 1. The specification unit 312 specifies, for example, the extraction area so as to include an area including a line segment connecting two positions specified by the position information. Further, the specification unit 312 specifies, for example, the extraction area so as to include an area surrounded by three or more positions specified by the position information.

The comparison unit 313 compares the extraction area specified by the specification unit 312 with the position information of the plurality of inhalation-related facilities stored in the inhalation-related facility DB 323.

The extraction unit 314 extracts, based on the comparison result obtained by the comparison unit 313, one or more inhalation-related facilities included within the extraction area.

The output unit 315 outputs the extraction result for the one or more inhalation-related facilities extracted by the extraction unit 314. The extraction result is information on the one or more inhalation-related facilities extracted by the extraction unit 314. The extraction result may be information indicating that the one or more inhalation-related facilities have been extracted by the extraction unit 314, or information specifying the one or more inhalation-related facilities extracted by the extraction unit 314. The information indicating that the inhalation-related facilities have been extracted includes, for example, information indicating the presence of the inhalation-related facility such as "there is an inhaling spot". The information specifying the inhalation-related facility includes, for example, position information indicating an address or the like of the inhalation-related facility, or identification information including a name, a uniform resource locator (URL), or the like of the inhalation-related facility. The extraction result may be text information or information indicating a mark or an icon, or may be map information in which the positions of one or more inhalation-related facilities are superimposed.

### <<Configuration Example of Log Information DB>>

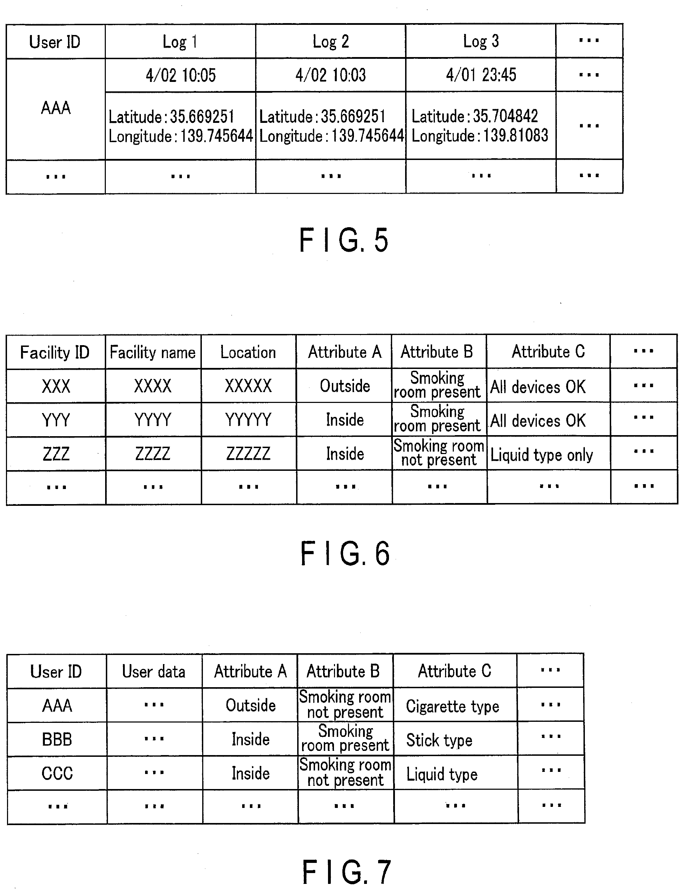

FIG. 5 is a diagram schematically showing a configuration example of a log information DB according to the embodiment of the present invention.

The log information DB 322 includes a record for each user terminal 2 configured by data in which "user ID", "time", and "position" are associated with one another. The data that configures the record is configured based on log information. The log information is acquired from the user terminal 2. The "user ID" corresponds to a user ID included in the log information. The "time" corresponds to time information included in the log information. The "time" may be, instead of the time information included in the log information, time information indicating the time when the information processing server 3 received the log information from the user terminal 2. The "position" corresponds to position information (latitude and longitude) included in the log information.

### <<Configuration Example of Inhalation-Related Facility DB>>

FIG. 6 is a diagram schematically showing a configuration example of an inhalation-related facility DB according to the embodiment of the present invention.

The inhalation-related facility DB 323 includes a record for each inhalation-related facility configured by data in which "facility ID", "facility name", "location", and "attribute" are associated with one another. The "facility ID" is information identifying an inhalation-related facility. The "facility name" is a name of an inhalation-related facility. The "location" is position information (latitude and longitude) specifying the location of an inhalation-related facility. The "attribute" is attribute information relating to an inhalation-related facility which is unique to the inhalation-related facility. The attribute information relating to an inhalation-related facility which is unique to the inhalation-related facility is hereinafter also referred to as "second attribute information". The second attribute information indicates one or more attributes of each of the inhalation-related facilities. The one or more attributes indicated by the second attribute information are hereinafter also referred to as "second attributes". The "attribute" may include one "attribute" item or may include a plurality of "attribute" items for the one or more second attributes indicated by the second attribute information. For example, "attribute A" indicates whether the inhalation-related facility is an outdoor facility or an indoor facility. For example, "attribute B" indicates the presence or absence of a smoking room in the inhalation-related facility. For example, "attribute C" indicates the type information of the inhaling device 1 usable in the inhalation-related facility. The "attribute" may include, in addition to "attribute A", "attribute B", and "attribute C", a URL of the inhalation-related facility, information indicating whether drinking and eating are possible, information indicating whether it is a public facility, information indicating whether it is a facility that can be used by the general public, information indicating a facility scale such as an area, a capacity of the facility, the number of ashtrays, the size of ashtrays, etc., information indicating availability status such as available date, time, scheduled removal date, etc., a final on-site confirmation date indicating the most recent date on which the facility information was confirmed, and the like.

Furthermore, the "attribute" of the inhalation-related facility may be information indicating a crowding state of the inhalation-related facility. The crowding state of the inhalation-related facility can be calculated by, for example, collecting in real time the number of inhaling devices 1 existing in the inhalation-related facility. As described above, the "attribute" of the inhalation-related facility may be information that can be calculated based on information that can be collected in real time.

### <<Configuration Example of User Information DB>>

FIG. 7 is a diagram schematically showing a configuration example of a user information DB according to the embodiment of the present invention.

The user information DB 325 includes a user information record for each user terminal 2 configured by data in which "user ID", "user data", and "attribute" are associated with one another. The "user ID" is information uniquely assigned to a plurality of user terminals 2 and identifying each user terminal 2. The "user data" is information relating to each user of the user terminal 2. The "user data" includes an address of each user terminal 2, the sex and age of each user, preference information of each user, etc. The "attribute" is the first attribute information. For example, the user selects, as the first attribute information, attribute information relating to the inhalation-related facility that the user desires to use. The "attribute" may include one "attribute" item or may include a plurality of "attribute" items for one or more first attributes indicated by the first attribute information. For example, "attribute A" indicates the user's selection of whether the inhalation-related facility is an outdoor facility or an indoor facility. For example, "attribute B" indicates the user's selection of the presence or absence of a smoking room in the inhalation-related facility. For example, "attribute C" indicates the user's selection of the type information on the inhaling device 1 usable in the inhalation-related facility. The "attribute" may include, in addition to "attribute A", "attribute B", and "attribute C", information indicating the user's selection of whether eating and drinking are possible, information indicating the user's selection of the scale of the facility, etc. For example, the "attribute" may be registered in advance by the user or may be suitably changed. The "attribute" may be registered or changed through an input from an input unit (not illustrated) of the user terminal 2 or an input on a terminal (not illustrated). The user does not need to select all the attributes and may select necessary attributes. The "attribute" may be information that changes in real time, and may be, for example, a crowding state. In this case, the user may be able to select, for example, "not crowded" as the "attribute".

The user information records stored in the user information DB 325 and relating to the plurality of user terminals 2 may be associated as a group. The group may be a group in which users of nearby activity ranges, such as users of nearby residences or users of nearby workplaces, are associated with each other. The group may be selected in a given manner by the user based on the "user ID", "user data", or "attribute" item. The user information DB 325 stores information of each group. The group information is information specifying each user information record included in the group. The group information is an example of information identifying each user terminal 2 included in the group. The group information is also an example of information identifying one or more user terminals 2 associated with a certain user terminal 2 and different from this user terminal 2. The group may be suitably changed.

The user information DB 325 is associated with the log information DB 322 using the "user ID" as a key.

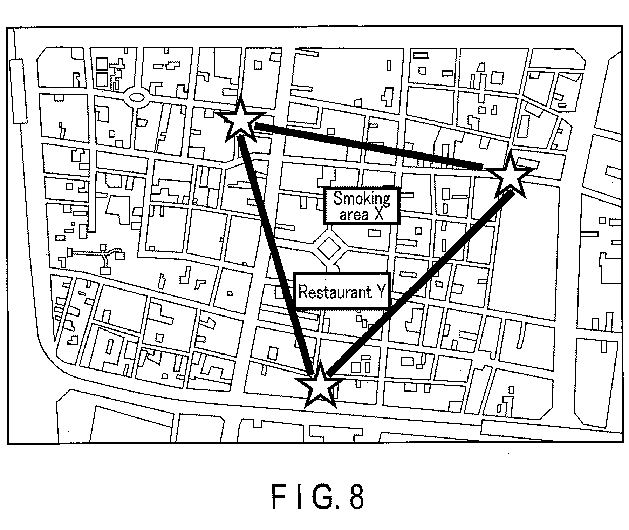

FIG. 8 is a diagram schematically showing a display example of an extraction result according to the embodiment of the present invention.

In the example of FIG. 8, the extraction area specified by the specification unit 312 and the one or more inhalation-related facilities extracted by the extraction unit 314 are superimposed and displayed on the map of the vicinity of the extraction area. The map of the vicinity of the extraction area is a map based on the map information 321 stored in the storage unit 32. For example, the extraction result is displayed on a display unit (not illustrated) of the user terminal 2. As in the example of FIG. 8, only the name of the inhalation-related facility may be displayed, or information indicating the availability status, which is a part of the second attribute information, may be displayed in addition to the name. The inhalation-related facility may be displayed in a given mode, e.g., with a mark or an icon in addition to text display, and may be displayed in a given mode. The display of the extraction area may be in a given display mode such as display of an outer edge of the extraction area with a thick colored line connecting at least two positions specified by the position information acquired by the acquisition unit 311. The at least two positions used for specifying the extraction area may be displayed in a given display mode, e.g., with a star. The extraction area and the inhalation-related facility may be displayed in a distinguishable manner.

### <<Example of Processing by Information Processing Server>>

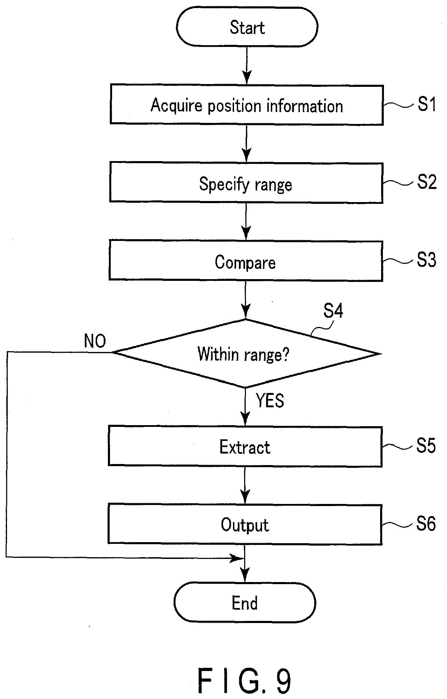

FIG. 9 is a flowchart showing an example of processing by the information processing server according to the embodiment of the present invention.

The processing procedure described below is merely an example, and each processing may be changed as much as possible. In addition, in the processing procedure described below, steps can be omitted, replaced, and added as appropriate according to the embodiment.

For simplifying the description, a user A, an inhaling device 1a possessed by the user A, and a user terminal 2a possessed by the user A will be described below as an example. The user A is a user identified by the user ID "AAA".

The acquisition unit 311 acquires position information indicating a position of the user terminal 2a of the user A connected to the inhaling device 1a in response to activation of the inhaling device 1a (step S1). At step S1, the acquisition unit 311 receives, in real time, for example, log information transmitted from the user terminal 2a via the communication unit 33. Based on the received log information, the acquisition unit 311 collects, in real time, for example, position information of the user terminal 2a. The acquisition unit 311 stores data based on the received log information to the log information DB 322 one by one.

The specification unit 312 specifies an extraction area including at least two positions specified by the position information acquired by the acquisition unit 311 (step S2). At step S2, the specification unit 312 acquires, for example, position information acquired by the acquisition unit 311 at a plurality of timings from the log information DB 322. A position specified by position information acquired at a certain timing may be the same position as a position specified by position information acquired at another timing. If the position specified by the position information acquired at a certain timing and the position specified by the position information acquired at another timing are substantially the same, the specification unit 312 may adopt only one of the positions. The range in which positions are regarded as being substantially the same may be set in advance, changeable, or set in a given manner by the user.

An example of acquiring position information used for specification of the extraction area by the specification unit 312 will be described.

The specification unit 312 can acquire given position information from the log information DB 322, but may acquire position information as exemplified below. The following examples may be combined as appropriate.

The specification unit 312 may acquire position information for each region from the log information DB 322. The region may be a range determined by the government such as a block, or may be a range set in a given manner. In this example, since the extraction area is specified for each region, the extraction area does not become too wide. Therefore, the number of inhalation-related facilities extracted in the extraction area does not become too large. Further, one or more inhalation-related facilities to be extracted in the extraction area are highly likely to be actually used by the user.

The specification unit 312 may acquire the position information from the log information DB 322 so that at least two positions specified by the position information fall within a predetermined distance range. The predetermined distance range may be set in advance, changeable, or set in a given manner by the user. In this example, since the size of the extraction area is limited, the extraction area does not become too large. Therefore, the number of inhalation-related facilities extracted in the extraction area does not become too large. Further, one or more inhalation-related facilities to be extracted in the extraction area are highly likely to be actually used by the user.

The specification unit 312 may acquire position information within a predetermined period from the log information DB 322. The predetermined period is a period going back from the present time. The predetermined period may be set in advance, changeable, or set in a given manner by the user. In this example, the extraction area is specified based on relatively new position information. Therefore, one or more inhalation-related facilities to be extracted in the extraction area are highly likely to be actually used by the user.

The specification unit 312 may acquire, from the log information DB 323, position information indicating the same positions as the plurality of inhalation-related facilities stored in the inhalation-related facility DB 322. In this example, the specification unit 312 does not acquire, from the log information DB 322, the position information relating to the activation of the inhaling device 1 at a place other than the inhalation-related facility. The place other than the inhalation-related facility is highly likely to be a place used by a user on a spur-of-the-moment basis. On the other hand, the inhalation-related facility is a place highly likely to be used continuously by the user. Therefore, one or more inhalation-related facilities to be extracted in the extraction area are highly likely to be actually used by the user.

The specification unit 312 may acquire, from the log information DB 322, position information indicating a position in which the log information acquisition frequency is high. The number of times of the acquisition frequency may be set in advance, changeable, or set in a given manner by the user. In this example, the extraction area is specified based on a position in which the frequency of use of the inhaling device 1 by the user is high. Therefore, one or more inhalation-related facilities to be extracted in the extraction area are highly likely to be actually used by the user.

An example of specifying the extraction area by the specification unit 312 will be described.

In one example, the specification unit 312 specifies an extraction area so as to include an area including a line segment connecting two positions specified by the position information. In this example, the specification unit 312 specifies an extraction area based on an area including a line segment connecting two positions as reference points. The specification unit 312 may specify, as an extraction area, an area extended in a direction orthogonal to the line segment connecting the reference points. The specification unit 312 may specify, as an extraction area, an area within a predetermined distance range from each point on the line segment connecting the reference points. The predetermined distance range may be set in advance, changeable, or set in a given manner by the user. The extraction area may be a rectangle or an ellipse including the line segment connecting the reference points, or may be any other shape. The extraction area may be specified as an area wider than the area including the line segment connecting the reference points exemplified. The amount or rate of expansion from the area including the line segment connecting the reference points may be set in advance or changeable. It can be said that the area including the line segment connecting the two positions is an area in which the user A is likely to use the inhaling device 1a. Therefore, the information processing server 3 can appropriately specify an extraction area for extracting an inhalation-related facility not used by the user A in an area in which the user A is highly likely to use the inhaling device 1a.

In another example, the specification unit 312 specifies the extraction area so as to include an area surrounded by three or more positions specified by the position information. In this example, the specification unit 312 uses three or more positions as reference points, and specifies, as an extraction area, an area including an area formed with the reference points as vertices. The specification unit 312 may specify, as an extraction area, a polygonal area formed by connecting the reference points with straight lines. The specification unit 312 may specify, as an extraction area, an area having a given shape and formed by connecting the reference points with curved lines other than straight lines. The extraction area may be specified as an area wider than an area formed with the reference points as vertices exemplified. The amount or rate of expansion from the area formed with the reference points as the vertices may be set in advance or changeable. It can be said that an area surrounded by three or more positions is an area in which the user A is highly likely to use the inhaling device 1a. Therefore, the information processing server 3 can appropriately specify an extraction area for extracting an inhalation-related facility not used by the user A in an area in which the user A is highly likely to use the inhaling device 1a.

The comparison unit 313 compares the extraction area specified by the specification unit 312 with the position information of the plurality of inhalation-related facilities (step S3). At step S3, the comparison unit 313 compares, for example, position information of the extraction area specified by the specification unit 312 with the position information of the plurality of inhalation-related facilities stored in the inhalation-related facility DB 323.

The comparison unit 313 determines whether or not an inhalation-related facility is included within the extraction area based on the comparison result (step S4). At step S4, the comparison unit 313 determines, for example, whether or not the position specified by the position information of the inhalation-related facility is included within the extraction area.

If the comparison unit 313 determines that an inhalation-related facility is included within the extraction area (step S4: YES), the processing shifts from step S4 to step S5. If the comparison unit 313 determines that an inhalation-related facility is not included within the extraction area (step S4: NO), the processing ends.

The extraction unit 314 extracts one or more inhalation-related facilities included within the extraction area (step S5). At step S5, the extraction unit 314 extracts, for example, one or more inhalation-related facilities included within the extraction area based on the comparison result of the comparison unit 313.

Furthermore, as exemplified below, the extraction unit 314 may extract, from among one or more inhalation-related facilities included within the extraction area, one or more inhalation-related facilities in which one or more second attributes indicated by the second attribute information match at least one of one or more first attributes indicated by the first attribute information. In this example, the extraction unit 314 acquires the first attribute information from the user information record stored in the user information DB 325 and associated with the user terminal 2a. The extraction unit 314 compares the acquired first attribute information with the second attribute information on each of the one or more inhalation-related facilities included within the extraction area. The extraction unit 314 compares each of the one or more first attributes indicated by the first attribute information with the corresponding attribute among the one or more second attributes indicated by the second attribute information. The extraction unit 314 extracts one or more inhalation-related facilities in which one or more second attributes indicated by the second attribute information match at least one of the one or more first attributes indicated by the first attribute information. In one example, the extraction unit 314 extracts an inhalation-related facility in which some part of the first attributes match the corresponding second attributes. Some part of the first attributes correspond to at least one of the first attributes. In another example, the extraction unit 314 extracts an inhalation-related facility in which all of the first attributes match the corresponding second attributes.

The output unit 315 outputs the extraction result for the one or more inhalation-related facilities extracted by the extraction unit 314 to the user terminal 2a via the communication unit 33 (step S6). At step S6, the output unit 315 may output, for example, as an extraction result, information indicating that the extraction unit 314 has extracted one or more inhalation-related facilities included within the extraction area. The output unit 315 may output, as an extraction result, information specifying the one or more inhalation-related facilities extracted by the extraction unit 314. Outputting the extraction result to the user terminal 2a includes transmitting the extraction result to the user terminal 2a. In this example, the information processing server 3 can extract information on an inhalation-related facility within a range specified based on the position in which the user A used the inhaling device 1a and present the information to the user A without requiring a request from the user A. The information processing server 3 can present information on an inhalation-related facility that may be unknown to the user A in an area frequently visited by the user A. Since the information processing server 3 does not need the request processing from the user A, the processing can be simplified. The user A can confirm the information on an inhalation-related facility in an area frequently visited by the user A without requiring a request for searching for an inhalation-related facility.

The output unit 315 may output the extraction result based on the comparison between the first attribute information and the second attribute information by the extraction unit 314. In this example, the information processing server 3 can extract information on an inhalation-related facility having an attribute desired by the user A within the extraction area and present the information to the user A.

The extraction result may include at least one second attribute among the one or more second attributes indicated by the second attribute information on the one or more inhalation-related facilities extracted by the extraction unit 314. The extraction result may include information indicating the availability status among the second attributes, etc. In this example, the information processing server 3 can present useful information to the user A in addition to information indicating an inhalation-related facility in an area specified based on the position in which the user A used the inhaling device 1a. By looking at the second attributes displayed on the user terminal 2a, the user A can easily grasp what kind of facility the inhalation-related facility is. By looking at the availability status displayed on the user terminal 2a, the user A can easily grasp when the inhalation-related facility is available.

The output unit 315 may output the extraction result to the user terminal 2a as a push notification. The push notification may be output in a given display mode such as text display, icon display, or mark display of the extraction result. The output unit 315 may output the extraction result to the user terminal 2a as a map display. In the map display, for example, the extraction area and the positions of one or more inhalation-related facilities as the extraction result are superimposed and displayed on a map of the vicinity of the extraction area. The map of the vicinity of the extraction area is a map based on the map information 321 stored in the storage unit 32. The output unit 315 may output one or both of the push notification and the map display to the user terminal 2a.

The output unit 315 may collectively output extraction results obtained after the previous output time to the user terminal 2a at a preset time or a time set by the user A. The output unit 315 may output the extraction result to the user terminal 2a in response to a request from the user A.

As exemplified below, in response to the user terminal 2a being present in any of the extraction areas, the output unit 315 may output the extraction result for this extraction area to the user terminal 2a. In this example, it is assumed that the acquisition unit 311 acquires log information from the user terminal 2 irrespective of whether or not the inhaling device 1a is activated. The log information may be continuously transmitted from the user terminal 2 to the information processing server 3 at a constant interval. The log information may include information generated by the user terminal 2a in response to activation of the inhaling device 1a and indicating that the inhaling device 1a is activated. As a result, the log information DB 322 can store the log information relating to the activation of the inhaling device 1a and the log information not relating to the activation of the inhaling device 1a in a distinguishable manner. The specification unit 312 stores information of the extraction area in the storage unit 32 every time the extraction area is specified. The storage unit 32 stores information on a plurality of extraction areas. The information of the plurality of extraction areas stored in the storage unit 32 is updated every time the specification unit 312 stores information of the extraction area in the storage unit 32. The comparison unit 313 compares the position information of the user terminal 2a acquired by the acquisition unit 311 with the information of the plurality of extraction areas stored in the storage unit 32. The comparison unit 313 determines whether or not the position specified by the position information of the user terminal 2a is included within any one of the plurality of extraction areas specified by the information of the plurality of extraction areas. In response to the position of the user terminal 2a being included within any one of the plurality of extraction areas, the comparison unit 313 selects an extraction area including the position of the user terminal 2a. The position of the user terminal 2a being included within the extraction area corresponds to the user terminal 2a being present within the extraction area. The extraction unit 314 extracts one or more inhalation-related facilities included within the extraction area selected by the comparison unit 313. The extraction unit 314 may extract, from among one or more inhalation-related facilities included within the extraction area, one or more inhalation-related facilities in which one or more second attributes indicated by the second attribute information match at least one of one or more first attributes indicated by the first attribute information. The output unit 315 outputs the extraction result for the one or more inhalation-related facilities extracted by the extraction unit 314 to the user terminal 2a. In this example, the information processing server 3 can present information on an inhalation-related facility in the vicinity of the user A at a timing when the user A enters an area in which the user A is highly likely to use the inhaling device 1a.

Furthermore, as exemplified below, the output unit 315 may output the extraction result to one or more user terminals 2 associated with the user terminal 2a and different from the user terminal 2a. The one or more user terminals 2 different from the user terminal 2a are hereinafter also referred to as "one or more other user terminals 2". In this example, the output unit 315 acquires information of a group including a user information record for the user terminal 2a from the user information DB 325. The output unit 315 specifies user information records for the one or more other user terminals 2 included in the group and specified by the acquired information of the group. The output unit 315 acquires addresses of the one or more other user terminals 2 from the specified user information records for the one or more other user terminals 2. Based on the acquired addresses of the one or more other user terminals 2, the output unit 315 outputs the extraction result to the one or more other user terminals 2 via the network N. The mode of outputting the extraction result to the one or more other user terminals 2 may be the same as the mode of outputting the extraction result to the user terminal 2a described above. In this example, the information processing server 3 can present, also to other users associated with the user, information on an inhalation-related facility within the area specified based on the position in which the user has used the inhaling device 1. Therefore, the associated users can share the information on the inhalation-related facility. In this case, instead of or in addition to the push notification, the information processing server 3 may notify the users of the information on the inhalation-related facility at a preset time or a time set by each user. The output unit 315 may output extraction results obtained after the previous output time to each user terminal 2 at a preset time or a time set by each user. The output unit 315 may output the extraction result to each user terminal 2 in response to a request from each user.

The extraction unit 314 extracts the information on the inhalation-related facility as the extraction result, but may extract information on a recommended facility as exemplified below, in addition to the information on the inhalation-related facility. In this case, the information processing server 3 performs processing in which "inhalation-related facility" is read as "recommended facility" in the flowchart of FIG. 9. At step S3, the comparison unit 313 compares the extraction area specified by the specification unit 312 with the position information of the plurality of recommended facilities stored in the recommended facility DB 324. At step S4, the comparison unit 313 determines whether or not a recommended facility is included within the extraction area based on the comparison result. At step S5, the extraction unit 314 extracts one or more recommended facilities included within the extraction area. The extraction unit 314 may use the user data included in the user information record stored in the user information DB 325 and associated with the user terminal 2a. For example, the extraction unit 314 extracts one or more recommended facilities based on at least one of age, sex, and preference information included in the user data. In this example, the information processing server 3 can extract one or more recommended facilities suitable for the user A. The facility extraction processing based on the comparison between the first attribute information and the second attribute information at step S5 may be omitted. At step S6, the output unit 315 outputs the extraction result for the one or more recommended facilities extracted by the extraction unit 314 to the user terminal 2a via the communication unit 33. The extraction result for the one or more recommended facilities is information on the one or more recommended facilities extracted by the extraction unit 314. The extraction result for the one or more recommended facilities may be information indicating that the one or more recommended facilities have been extracted by the extraction unit 314. The extraction result for the one or more recommended facilities may be information specifying the one or more recommended facilities extracted by the extraction unit 314. The extraction result for the one or more recommended facilities may be text information, or information indicating a mark or an icon, or may be map information in which positions of one or more recommended facilities are superimposed. The extraction result for the one or more recommended facilities may be output together with the extraction result for the one or more inhalation-related facilities. For example, the output unit 315 may output the extraction result for the one or more inhalation-related facilities and the extraction result for the one or more recommended facilities to the user terminal 2a as a map display. In the map display, for example, the extraction area, the positions of the one or more inhalation-related facilities and the positions of the one or more recommended facilities are superimposed and displayed as the extraction results on the map of the vicinity of the extraction area.

In this example, the information processing server 3 can extract the information on the recommended facility within the extraction area in addition to the information on the inhalation-related facility and present the information to the user A. Therefore, for example, a promotion such as a sales promotion via a presentation of a recommended facility is possible.

### <<Modification>>

The above-described embodiment may include the following modification.

For simplifying the description, a user A and a user terminal 2a possessed by the user A will be described below as an example.

The acquisition unit 311 acquires, from the user terminal 2a, position information indicating at least two positions that have been designated, and a request for searching for an inhalation-related facility (hereinafter referred to as a "search request"). The position information indicating the at least two positions designated is position information indicating arbitrary at least two positions designated with the user terminal 2a by the user A. The user A can designate arbitrary at least two positions in which the user A wants to search for an inhalation-related facility. Hereinafter, the position designated is also referred to as a "designated position". The position information indicating the designated at least two positions is hereinafter also referred to as "designated position information". The search request is a request for searching for an inhalation-related facility input by the user A with the user terminal 2a.

The specification unit 312 specifies an extraction area including at least two designated positions based on the designated position information acquired by the acquisition unit 311 and the search request. The extraction area based on the designated position information is specified in the same manner as the extraction area based on the position information described for step S2.

The comparison unit 313 compares the extraction area specified by the specification unit 312 with the position information of the plurality of inhalation-related facilities stored in the inhalation-related facility DB 323. The comparison unit 313 determines whether or not an inhalation-related facility is included within the extraction area based on the comparison result. If the comparison unit 313 determines that an inhalation-related facility is included within the extraction area, the extraction unit 314 extracts one or more inhalation-related facilities included within the extraction area.

Furthermore, as described above, the extraction unit 314 may extract, from among one or more inhalation-related facilities included within the extraction area, one or more inhalation-related facilities in which one or more second attributes indicated by the second attribute information match at least one of one or more first attributes indicated by the first attribute information. In this example, the first attribute information may be information stored in the user information DB 325 or information included in the search request.

The output unit 315 outputs the extraction result for the one or more inhalation-related facilities extracted by the extraction unit 314 to the user terminal 2a. The extraction result may be output in the same manner as described above. In this example, if the user A wishes to acquire information relating to an inhalation-related facility within an extraction area including at least two designated positions, the information processing server 3 can extract information on the inhalation-related facility based on the search request and present the information to the user A.

The extraction result extracted by the extraction unit 314 based on the search request may be output to one or more other user terminals 2 associated with the user terminal 2a as described above. The mode of outputting the extraction result to the one or more other user terminals 2 may be the same as the mode of outputting the extraction result to the user terminal 2a described above. In this example, the information processing server 3 can present, also to other users associated with the user A, information on an inhalation-related facility extracted based on the search request of the user A. Therefore, the associated users can share the information on the inhalation-related facility.

As described above, the information processing server 3 may extract one or more recommended facilities based on the designated position information and output an extraction result for the one or more recommended facilities.

The information processing device according to the embodiment may be realized by one device as described using the information processing server 3 as an example, or by a plurality of devices in which functions are distributed.

The program may be transferred in a state of being stored in the device, or may be transferred in a state of not being stored in the device. In the latter case, the program may be transferred via a network, or may be transferred in a state of being recorded in a recording medium. The recording medium is a non-transitory tangible medium. The recording medium is a computer-readable medium. The recording medium may be any medium that can store a program and can be read by a computer, such as a CD-ROM or a memory card, and may be in any form.

The present invention is not limited to the above-described embodiments, and can be modified in various manners in practice during implementation without departing from the gist of the invention. Moreover, the embodiments can be suitably combined; in that case, the combined advantages are obtained. Furthermore, the above-described embodiments include various inventions, and various inventions can be extracted by a combination selected from structural elements disclosed herein. For example, if the object of the invention is achieved and the advantages of the invention are attained even after some of the structural elements disclosed in connection with the embodiments are deleted, the structure made up of the resultant structural elements can be extracted as an invention.

### REFERENCE SIGNS LIST

1a-1n: inhaling device, 2a-2n: user terminal, 3: information processing server, 10: information distribution system, 2l: user terminal, 2m: user terminal, 2n: user terminal, 3: information processing server, 10: information distribution system, 21: control unit, 22: storage unit, 23: input unit, 24: display unit, 25: communication unit, 26: detection unit, 31: control unit, 32: storage unit, 33: communication unit, 100A: inhaling device, 100B: inhaling device, 110: power-supply unit, 111A: power supply, 111B: power supply, 112A: sensor unit, 112B: sensor unit, 113A: notification unit, 113B: notification unit, 114A: storage unit, 114B: storage unit, 115A: communication unit, 115B: communication unit, 116A: control unit, 116B: control unit, 120: cartridge, 121A: heating unit, 121B: heating unit, 122: liquid guide unit, 123: liquid storage unit, 124: mouthpiece, 130: flavor-imparting cartridge, 131: flavor source, 140: holding part, 141: internal space, 142: opening, 143: bottom portion, 144: heat-insulating part, 150: stick-shaped base material, 151: base material portion, 152: suction portion, 180: airflow path, 181: air inflow hole, 182: air outflow hole, 190: arrow, 311: acquisition unit, 312: specification unit, 313: comparison unit, 314: extraction unit, 315: output unit, 321: map information, 322: log information DB, 323: inhalation-related facility DB, 324: recommended facility DB, 325: user information DB, N: network.

## Claims

1. An information processing device comprising:
a storage unit configured to store position information indicating positions of a plurality of inhalation-related facilities;
an acquisition unit configured to acquire position information indicating a position of a user terminal of a user connected to an inhaler in response to activation of the inhaler;
a specification unit configured to specify an extraction area including at least two positions specified by the position information acquired by the acquisition unit;
a comparison unit configured to compare the extraction area specified by the specification unit with the position information of the plurality of inhalation-related facilities;
an extraction unit configured to extract, based on a comparison result obtained by the comparison unit, one or more inhalation-related facilities included within the extraction area; and
an output unit configured to output an extraction result obtained by the extraction unit to the user terminal.

2. The information processing device according to claim 1, wherein
the storage unit is configured to store first attribute information indicating one or more attributes of an inhalation-related facility, wherein the attributes are selected by a user, and second attribute information indicating one or more attributes of each of the plurality of inhalation-related facilities, and
the extraction unit is configured to extract, from among the one or more inhalation-related facilities included within the extraction area, one or more inhalation-related facilities in which one or more attributes indicated by the second attribute information match at least one of the one or more attributes indicated by the first attribute information.

3. The information processing device according to claim 1 or 2, wherein the specification unit is configured to specify the extraction area so as to include an area including a line segment connecting two positions.

4. The information processing device according to claim 1 or 2, wherein
the specification unit is configured to specify the extraction area so as to include an area surrounded by three or more positions.

5. The information processing device according to any one of claims 1 to 4, wherein
the extraction result includes at least one attribute among one or more attributes indicated by second attribute information of one or more inhalation-related facilities extracted by the extraction unit.

6. The information processing device according to any one of claims 1 to 5, wherein
the storage unit is configured to store information identifying one or more user terminals associated with the user terminal and different from the user terminal, and
the output unit is configured to output the extraction result to the one or more user terminals.

7. The information processing device according to any one of claims 1 to 6, wherein
the storage unit is further configured to store position information of a recommended facility different from the inhalation-related facility,
the extraction unit is configured to extract one or more recommended facilities included within the extraction area, and
the output unit is configured to output an extraction result of the one or more recommended facilities extracted by the extraction unit to the user terminal.

8. The information processing device according to any one of claims 1 to 7, wherein
the acquisition unit is configured to acquire position information indicating at least two positions designated from the user terminal, and a request for searching for an inhalation-related facility,
the specification unit is configured to specify the extraction area including the designated at least two positions based on the position information indicating the designated at least two positions and the request for searching for the inhalation-related facility, and
the extraction unit is configured to extract one or more inhalation-related facilities included within the extraction area including the designated at least two positions.

9. An information processing method comprising:
acquiring position information indicating a position of a user terminal of a user connected to an inhaler in response to activation of the inhaler;
specifying an extraction area including at least two positions specified by the acquired position information;
comparing the extraction area with position information, stored in a storage unit, of a plurality of inhalation-related facilities;
extracting, based on a comparison result, one or more inhalation-related facilities included within the extraction area; and
outputting an extraction result to the user terminal.

10. A program for causing a computer to implement:
an acquisition unit configured to acquire position information indicating a position of a user terminal of a user connected to an inhaler in response to activation of the inhaler;
a specification unit configured to specify an extraction area including at least two positions specified by the position information acquired by the acquisition unit;
a comparison unit configured to compare the extraction area specified by the specification unit with position information, stored in a storage unit, of a plurality of inhalation-related facilities;
an extraction unit configured to extract, based on a comparison result obtained by the comparison unit, one or more inhalation-related facilities included within the extraction area; and
an output unit configured to output an extraction result obtained by the extraction unit to the user terminal.
